# EUROPÄISCHE PATENTSCHRIFT

(11) **EP 1 247 970 B1**
(45) Veröffentlichungstag und Bekanntmachung des Hinweises auf die Patenterteilung: **23.01.2008**
(21) Anmeldenummer: 02007821.8
(22) Anmeldetag: 08.04.2002
(51) Int. Cl.: F02D 41/40

(54) **Verfahren und Vorrichtung zur Steuerung einer Brennkraftmaschine**
Method and system for controlling an internal combustion engine
Méthode et système de commande d'un moteur à combustion interne

(30) Priorität: 06.04.2001 DE 10117100; 07.03.2002 DE 10210163
(43) Veröffentlichungstag der Anmeldung: 09.10.2002
(73) Patentinhaber: ROBERT BOSCH GMBH, 70442 Stuttgart (DE)
(72) Erfinder: Hedenetz, Andreas, 73770 Denkendorf (DE); Pfaeffle, Andreas, 71543 Wuestenrot (DE); Rueger, Johannes-Joerg, Dr., 1110 Wien (AT); Jaudas, Rainer, 70825 Korntal-Muenchingen (DE); Hammel, Christof, 70188 Stuttgart (DE); Gangi, Marco, 73734 Esslingen (DE); Schulz, Udo, 71665 Vaihingen/Enz (DE); Schueller, Michael, 71292 Friolzheim (DE)

(56) Entgegenhaltungen:
- EP-A- 1 035 314
- WO-A-02/06656
- US-A- 4 621 599
- US-A- 4 685 290
- US-A- 6 032 642

## Beschreibung

### Stand der Technik

Die Erfindung betrifft ein Verfahren und eine Vorrichtung zur Steuerung einer Brennkraftmaschine.

Häufig erfolgen bei Systemen zur Kraftstoffeinspritzung mehrere Teileinspritzungen pro Arbeitszyklus und Zylinder der Brennkraftmaschine. Hierbei wird i.d.R. zwischen wenigstens einer Haupteinspritzung sowie wenigstens einer Voreinspritzung und/oder wenigstens einer Nacheinspritzung unterschieden. Die verschiedenen Einspritzungen erfüllen dabei sehr unterschiedliche Zwecke. Die Voreinspritzungen dienen zur Geräuschreduzierung und/oder zur Momentenerhöhung. In Verbindung mit der Abgasnachbehandlung sind Nacheinspritzungen erforderlich, die beispielsweise bei Systemen mit einem Partikelfilter eine Temperaturerhöhung im Abgas bewirken. Weiter kann vorgesehen sein, dass mittels einer Nacheinspritzung Kohlenwasserstoffe eingebracht werden, die in einem NOx-Katalysator reagieren.

Eine Verfahren und eine Vorrichtung zur Steuerung einer Brennkraftmaschine ist aus der EP-A-1 035 314 bekannt. Dort wird der Einspritzvorgang in zwei Teileinspritzungen aufgeteilt. Abhängig vom Betriebszustand wird eine Einspritzstrategie ausgewählt. Bei der eine oder mehrere Teileinspritzungen erfolgen. Eine dynamische Anpassung der Anzahl der Teileinspritzungen zeigt der Stand der Technik nicht. Es ist lediglich eine feste Zuordnung von verschiedenen Strategien zu bestimmten Betriebszuständen vorgesehen. Eine variable Ab- und Zuschaltung von Teileinspritzungen ist nicht beschrieben.

Üblicherweise ist vorgesehen, dass die Teileinspritzungen, insbesondere die Nacheinspritzungen und die Voreinspritzungen nur in bestimmten Betriebszuständen erfolgen. So ist z.B. bei der Partikelfilterregeneration die Nacheinspritzung, die zur Aufheizung des Abgases dient, nur kurzzeitig für einige Minuten im Abstand von mehreren Tausend gefahrenen Kilometer erforderlich. Andererseits erfolgt die Voreinspritzung nur bis zu bestimmten Drehzahlen.

Diesen Forderungen bezüglich verschiedener Teileinspritzungen stehen verschiedene Randbedingungen des jeweiligen Einspritzsystems gegenüber, die eine Einschränkung der jeweiligen möglichen Teileinspritzungen erfordern. Solche Begrenzungen können beispielsweise elektrischer oder hydraulischer Art sein. So ist beispielsweise aufgrund der Endstufe, die die Injektoren ansteuert, nur eine bestimmte Abfolge von Einspritzungen mit bestimmten Abständen möglich. Hydraulische Effekte sehen derart aus, dass beispielsweise bei einem CR-System (Common Rail-System) die Hochdruckpumpe nur eine bestimmte Kraftstoffmenge bereitstellen kann.

Insgesamt sind diese Randbedingungen sehr komplex. Bei herkömmlichen Systemen findet eine "worst-case-Auslegung" statt, d.h. für jeden Drehzahl- und Lastbereich im Motorkennfeld werden die möglichen Teileinspritzungen konservativ abgeschätzt, d.h. auf die maximal mögliche Teileinspritzung ausgelegt. Dies wird schon bei der Applikation entsprechend berücksichtigt. Hinzu kommt, dass viele Parameter von Streuungen der jeweiligen Komponenten abhängen. Dies führt dazu, dass die Auslegung noch konservativer wird als es im Einzelfall erforderlich ist. Dies führt dazu, dass die Leistungsfähigkeit des Systems nicht ausgenutzt wird bzw. zu groß dimensioniert wird. Hierdurch entstehen erhebliche Kostennachteile.

### Vorteile der Erfindung

Dadurch, dass geprüft wird, ob wenigstens eine Vorgabe erfüllt ist, und abhängig von der Überprüfung der Vorgaben alle angeforderten Teileinspritzungen erfolgen oder wenigstens eine Teileinspritzung unterbunden wird, ist es möglich, eine optimale Ausnutzung der Möglichkeiten des Einspritzsystems sicherzustellen. Unter Berücksichtigung der jeweiligen Randbedingungen wie Einspritzdauer, Raildruck, Drehzahl und Temperatur, werden die einzelnen Teileinspritzungen freigegeben und/oder abgeschaltet. Des weiteren ermöglicht die Vorgehensweise die Berücksichtigung der tatsächlichen Eigenschaften der verschiedenen Komponenten. Dadurch ist eine verbesserte Ausnutzung der Möglichkeiten des Einspritzsystems möglich. Des weiteren ist eine Vereinfachung der Applikation möglich. Dabei ist es besonders vorteilhaft dass eine Ladungsbilanz und/oder eine Mengenbilanz erfüllt ist wobei die Ladungsbilanz und/oder die Mengenbilanz eine höchstmögliche Anzahl von Teileinspritzungen vorgeben. Dadurch ist es möglich die wesentlichsten Parameter zu berücksichtigen. Den Teileinspritzungen sind unterschiedliche Prioritäten zugeordnet. Die Teileinspritzungen werden abhängig von ihrer Priorität unterbunden. Dadurch können wichtige Funktionalitäten des Einspritzsystems auch bei einem eingeschränkten Betrieb gewährleistet werden.

Eine besonders einfache Realisierung des Verfahrens ergibt sich dadurch, dass ausgehend von den Vorgaben eine Anzahl von möglichen Teileinspritzungen vorgebbar ist. Dadurch kann der Aufwand, insbesondere an Software und Rechenleistung minimiert werden.

Eine besonders sichere Vorgehensweise ergibt sich, wenn die Anzahl der möglichen Teileinspritzungen auf eins gesetzt wird, wenn eine die Ladung eines Speicherelements charakterisierende Größe, kleiner als ein Schwellenwert ist. In den beschriebenen Ausführungsformen wird die Spannung an einem Boosterkondensator einer Magnetventilendstufe und/oder die Spannung eines Bufferkondensators einer Piezoendstufe ausgewertet.

Weitere vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigt Figur 1 ein Diagramm eines sogenannten Common-Rail-Einspritzsystems, Figur 2 ein Diagramm zur Verdeutlichung der erfindungsgemäßen Vorgehensweise und Figur 3 ein Ablaufdiagramm einer speziellen Ausführungsform.

### Beschreibung der Ausführungsbeispiele

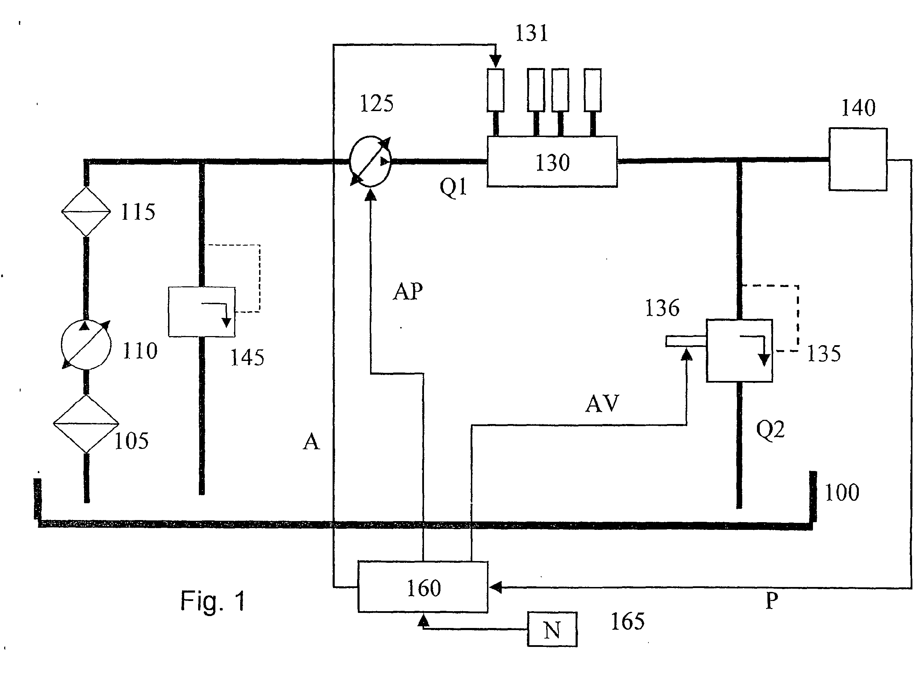

In Figur 1 sind die für das Verständnis der Erfindung erforderlichen Bauteile eines Kraftstoffversorgungssystems einer Brennkraftmaschine mit Hochdruckeinspritzung dargestellt. Das dargestellte System wird üblicherweise als Common-Rail-System bezeichnet.

Die erfindungsgemäße Vorgehensweise wird im Folgenden am Beispiel eines Common-Rail-Systems (CR-System) einer Dieselbrennkraftmaschine beschrieben. Sie ist aber nicht auf diese Anwendung beschränkt. Sie kann auch bei anderen Einspritzsystemen eingesetzt werden. Insbesondere ist sie auch bei Systemen zur Steuerung von Benzinbrennkraftmaschinen und/oder Systemen, bei denen die eingespritzte Kraftstoffmenge mittels Magnetventilen und/oder Piezoaktoren gesteuert wird, anwendbar.

Mit 100 ist ein Kraftstoffvorratsbehälter bezeichnet. Dieser steht über ein ersten Filter 105, eine Vorförderpumpe 110 mit einem zweiten Filtermittel 115 in Verbindung. Vom zweiten Filtermittel 115 gelangt der Kraftstoff über eine Leitung zu einer Hochdruckpumpe 125. Die Verbindungsleitung zwischen dem Filtermittel 115 und der Hochdruckpumpe 125 steht über ein Niederdruckbegrenzungsventil 145 mit dem Vorratsbehälter 100 in Verbindung. Die Hochdruckpumpe 125 steht mit einem Rail 130 in Verbindung. Das Rail 130 wird auch als Speicher bezeichnet und steht über Kraftstoffleitungen mit verschiedenen Injektoren 131 in Kontakt. Über ein Druckablaßventil 135 ist das Rail 130 mit dem Kraftstoffvorratsbehälter 100 verbindbar. Das Druckablaßventil 135 ist mittels einer Spule 136 steuerbar.

Die Leitungen zwischen dem Ausgang der Hochdruckpumpe 125 und dem Eingang des Druckregelventils 135 werden als Hochdruckbereich bezeichnet. In diesem Bereich steht der Kraftstoff unter hohem Druck. Der Druck im Hochdruckbereich wird mittels eines Sensors 140 erfaßt. Die Leitungen zwischen dem Tank 100 und der Hochdruckpumpe 125 werden als Niederdruckbereich bezeichnet.

Eine Steuerung 160 beaufschlagt die Hochdruckpumpe 125 mit einem Ansteuersignal AP, die Injektoren 131 mit einem Ansteuersignal A und/oder das Druckablaßventil 135 mit Ansteuersignal AV. Die Steuerung 160 verarbeitet verschiedene Signale verschiedener Sensoren 165, die den Betriebszustand der Brennkraftmaschine und/oder des Kraftfahrzeugs, daß die Brennkraftmaschine antreibt, charakterisieren. Ein solcher Betriebszustand ist beispielsweise die Drehzahl N der Brennkraftmaschine.

Diese Einrichtung arbeitet wie folgt: Der Kraftstoff, der sich im Vorratsbehälter befindet, wird von der Vorförderpumpe 110 durch die Filtermittel 105 und 115 gefördert.

Steigt der Druck im Niederdruckbereich auf unzulässig hohe Werte an, so öffnet das Niederdruckbegrenzungsventil 145 und gibt die Verbindung zwischen dem Ausgang der Vorförderpumpe 110 und dem Vorratsbehälter 100 frei.

Die Hochdruckpumpe 125 fördert die Kraftstoffmenge Q1 vom Niederdruckbereich in den Hochdruckbereich. Die Hochdruckpumpe 125 baut im Rail 130 einen sehr hohen Druck auf. Üblicherweise werden bei Systemen für fremdgezündete Brennkraftmaschinen Druckwerte von etwa 30 bis 100 bar und bei selbstzündenden Brennkraftmaschinen Druckwerte von etwa 1000 bis 2000 bar erzielt. Über die Injektoren 131 kann der Kraftstoff unter hohem Druck den einzelnen Zylinder der Brennkraftmaschine zugemessen werden.

Mittels des Sensors 140 wird der Druck P im Rail bzw. im gesamten Hochdruckbereich erfaßt. Mittels der steuerbaren Hochdruckpumpe 125 und/oder des Druckablaßventils 135 wird der Druck im Hochdruckbereich geregelt.

Als Vorförderpumpe 110 werden üblicherweise Elektrokraftstoffpumpen eingesetzt. Für höhere Fördermengen, die insbesondere bei Nutzkraftfahrzeugen erforderlich sind, können auch mehrere parallel geschaltete Vorförderpumpen eingesetzt werden.

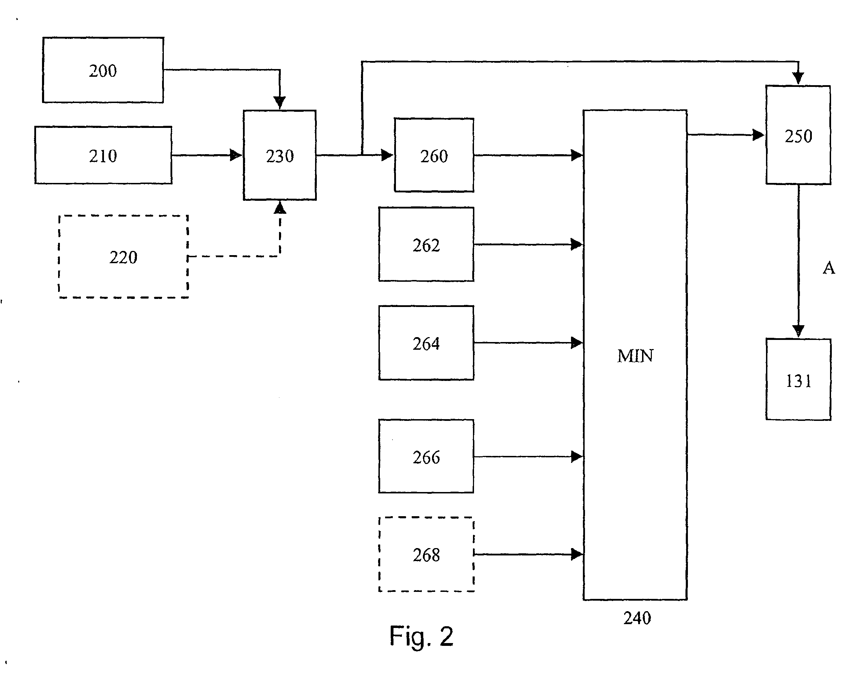

In Figur 2 ist die erfindungsgemäße Vorgehensweise anhand eines Ablauf-Diagrammes dargestellt. Vorzugsweise ist die dargestellte Funktion Teil der Steuerung 160. Eine Motorsteuerung 200, eine Abgasnachbehandlung 210 sowie weitere Steuerungen 220, die gestrichelt dargestellt sind, beaufschlagen eine Einspritzverlaufsanforderung 230 mit Signalen. Diese wiederum beaufschlagt eine Umrechnung 260 240 und einen Prioritätenmanager 250 mit einem Solleinspritzverlauf. Die Umrechnung 260 beaufschlagt eine Minimalauswahl 240 mit einem Signal. Der Minimalauswahl werden ferner die Ausgangssignale verschiedener Vorgaben, wie beispielsweise einer Ladungsbilanz 262 einer Mengenbilanz 264, einer Vorgabe der Maximalzahl der Einspritzung 266 und weitere Vorgaben 268, zugeleitet. Die Minimalauswahl 240 beaufschlagt wiederum den Prioritätenmanager 250 mit einem Signal. Der Prioritätenmanager 250 stellt dann das Signal A zur Ansteuerung der Injektoren 131, die im folgenden auch als Steller 131 bezeichnet werden, zur Verfügung.

Die Motorsteuerung gibt abhängig von dem gewünschten Moment und weiteren Betriebskenngrößen wie beispielsweise der Drehzahl bestimmte Anforderungen für Teileinspritzungen vor. Insbesondere gibt die Motorsteuerung eine und/oder mehrere Haupteinspritzungen vor, die insbesondere einen erheblichen Beitrag zum Gesamtdrehmoment beitragen. Des weiteren kann vorgesehen sein, dass wenigstens eine Voreinspritzung angefordert wird, die einen Beitrag zum Drehmoment liefert und/oder die zur Geräuschreduzierung dient.

Eine Abgasnachbehandlung 210 gibt in bestimmten Betriebszuständen Anforderungen für Einspritzungen vor. Dies sind insbesondere Nacheinspritzungen, die zur Abgasnachbehandlung dienen. Des weiteren können weitere Steuerungen 220 vorgesehen sein, die weitere Teileinspritzungen anfordern.

Ausgehend von diesen Anforderungen gibt die Einspritzverlaufsanforderung 230 den Einspritzverlauf für die gesamte Einspritzung eines Zyklus, bestehend aus wenigstens einer Haupteinspritzung, wenigstens einer Voreinspritzung und/oder wenigstens einer Nacheinspritzung vor. Zum mindesten erfolgt eine Haupteinspritzung. In besonderen Betriebszuständen kann gewünscht sein, dass sowohl eine oder mehrere Voreinspritzungen erfolgen und dass in ausgewählten Betriebszuständen eine oder zwei Nacheinspritzungen erfolgen. Des weiteren kann vorgesehen sein, dass die Haupteinspritzung ebenfalls in zwei oder mehreren Haupteinspritzungen aufgeteilt wird. Die Einspritzverlaufsanforderung 230 übermittelt das Signal bezüglich des Solleinspritzverlaufs an die Umrechnung 260 und den Prioritätenmanager 250.

Die Umrechnung 260 ermittelt die Anzahl der Teileinspritzungen und gibt diese Anzahl an die Minimalauswahl 240 weiter.

Bevorzugt sind zwei Voreinspritzungen, eine oder zwei Haupteinspritzungen und zwei Nacheinspritzungen. Die erfindungsgemäße Vorgehensweise ist aber nicht auf die Aufteilung der Einspritzung in diese Teileinspritzungen beschränkt, sie kann auch bei anderen Systemen mit mehr oder weniger Teileinspritzungen verwendet werden.

Die Ladungsbilanz 262, die Mengenbilanz 264 und die Vorgabe der Maximalzahl der Einspritzung 266 sowie die weiteren Vorgaben 268 berücksichtigen verschiedene Randbedingungen des Einspritzsystems, die erfüllt sein müssen. Ausgehend von diesen Randbedingungen geben die Ladungsbilanz 262, die Mengenbilanz 264 und die Vorgabe der Maximalzahl der Einspritzung 266 sowie die weiteren Vorgaben 268 jeweils eine Anzahl von maximal möglichen Teileinspritzungen vor.

So ist beispielsweise bei Common-Rail-Systemen die maximale Fördermenge der Hochdruckpumpe limitiert. Dies wird durch die Mengenbilanz 264 berücksichtigt. Ausgehend vom momentanen Betriebszustand gibt die Mengenbilanz die Anzahl der möglichen Teileinspritzungen vor.

Die Mengenbilanz 264 begrenzt die Einspritzungen derart, dass die Summe der Einspritzmengen, der Steuermengen im Injektor und der Leckagemengen im System die maximale Fördermenge der Hochdruckpumpe nicht übersteigen. Die Leckagemenge, insbesondere die Leckagemenge der Hochdruckpumpe 125 hängt dabei wiederum vom Raildruck ab. Die Steuermenge Injektoren hängt sowohl vom Raildruck als auch von der Einspritzdauer ab.

Vorzugsweise gibt die Mengenbilanz die Anzahl der möglichen Teileinspritzungen abhängig von einer und/oder mehreren Betriebskenngrößen vor. Als Betriebskenngrößen werden insbesondere die Drehzahl der Brennkraftmaschine, der Raildruck, die Last, die beispielsweise durch die gewünschte einzuspritzende Kraftstoffmenge charakterisiert wird und/oder die Dauer der Teileinspritzungen ausgewertet. In einer einfachen Ausführungsform wird die Anzahl abhängig von der Drehzahl und einem Lastsignal vorgegeben.

Bei Common-Rail-Systemen mit Piezoaktoren muss weiter sichergestellt werden, dass zwischen zwei Teileinspritzungen ein hydraulischer Koppler gefüllt werden kann.

Die Ladungsbilanz 262 berücksichtigt Randbedingungen in Verbindung mit der Endstufe, die zur Ansteuerung der Injektoren dient. So wird beispielsweise berücksichtigt, dass lediglich eine maximal zulässige Verlustleistung auftreten darf. Des weiteren werden bei Magnetventilen Endstufen verwendet, bei denen ein sogenannter BoosterKondensator aufgeladen und die Ladung des BoosterKondensators beim Beginn der Ansteuerung zur Ansteuerung des Magnetventils verwendet wird. Die Teileinspritzungen müssen in einer solchen Abfolge auftreten, dass dieser BoosterKondensator immer ausreichend Energie aufweist, um die Einspritzungen durchzuführen. Vorzugsweise gibt die Ladungsbilanz die Anzahl der möglichen Teileinspritzungen von dem Ladezustand und/oder der Spannung an einem Boosterkondensator vor.

Bei Piezoaktoren wird üblicherweise ein DC/DC-Wandler verwendet, der die Versorgungsspannung des Fahrzeugs auf eine erhöhte Spannung von circa 250V wandelt. Der DC/DC-Wandler selbst ist im wesentlichen durch ein induktives Bauelement hinsichtlich seiner Leistung begrenzt. Die zur Verfügung stehende Energie hängt dabei wesentlich von der Umgebungstemperatur ab.

Vorzugsweise gibt die Ladungsbilanz 262 die Anzahl der möglichen Teileinspritzungen abhängig von einer Größe vor, die den Zustand der Endstufe zur Ansteuerung der Injektoren charakterisiert vor. Bei einer Endstufe für Magnetventil ist dies vorzugsweise die Spannung eines sogenannten Boosterkondensators und/oder der Wert einer Versorgungsspannung. Bei Endstufe für einen Piezoaktor ist dies vorzugsweise die Spannung eines sogenannten Bufferkondensators und/oder der Wert einer Versorgungsspannung.

Bei Systemen mit Piezo-Aktoren wird die Anzahl der möglichen Teileinspritzungen durch die Verlustleistung des Steuergerätes begrenzt, welche im Wesentlichen durch die Ansteuerspannung bestimmt wird. Die Ansteuerspannung hängt vom Raildruck und der Temperatur ab. So kann es in bestimmten Betriebspunkten, insbesondere bei hohem Raildruck und zahlreichen Teileinspritzungen, der Fall eintreten, dass die Energie, die das Steuergerät zur Verfügung stellt, nicht ausreicht. Die Folge kann eine thermische Überhitzung sein. Dies wird durch die Begrenzung der Anzahl der Teileinspritzungen in Abhängigkeit der Ansteuerspannung und/oder in Abhängigkeit von Größen, von der Ansteuerspannung abhängt, verhindert.

Dies bedeutet die Vorgabe 268 gibt die Anzahl der maximal möglichen Teileinspritzungen abhängig von der Ansteuerspannung und/oder von Größen, von der die Ansteuerspannung abhängt, vor. Solche Größen sind vorzugsweise wenigstens der Raildruck und/oder eine Temperaturgröße, insbesondere die Kraftstofftemperatur und/oder die Umgebungstemperatur.

Vorzugsweise ist vorgesehen dass die Anzahl der Teileinspritzungen in einer Kennlinie oder einem Kennfeld abhängig von den entsprechenden Größen abgelegt ist.

Bei einer Ausführungsform gibt die Ladungsbilanz 262 die Anzahl der möglichen Teileinspritzungen abhängig von einer und/oder mehreren Betriebskenngrößen vor. Als Betriebskenngrößen werden insbesondere die Drehzahl der Brennkraftmaschine, die Last der Brennkraftmaschine, die beispielsweise durch die gewünschte einzuspritzende Kraftstoffmenge charakterisiert wird, die Dauer der Teileinspritzungen, ein Temperaturwert, eine den Ladungszustand eines Speicherelements charakterisierenden Größe, die erforderliche Rechargezeit und/oder die Versorgungsspannung berücksichtigt.

Als Speicherelement werden insbesondere ein Boosterkondensator oder ein Bufferkondensator verwendet. Die Spannung an diesen Kondensatoren charakterisieren deren Ladungszustand. Als Rechargezeit wird üblicherweise die Zeit bezeichnet, um den Kondensator auf eine bestimmte Spannung aufzuladen. Hierbei handelt es sich im wesentlichen um eine konstante Größe.

Diese Vorgaben 262 bis 268 geben jeweils eine höchst zulässige Anzahl von Teileinspritzungen vor.

Ist die Zahl der Solleinspritzungen, die von der Umrechnung 260 ermittelt wird, größer als die von der Ladungsbilanz 262, der Mengenbilanz 264 oder der anderen Bilanzen 266 oder 268 vorgegebenen Anzahl von Teileinspritzungen, so übermittelt die Minimalauswahl 240 ein entsprechendes Signal an den Prioritätenmanager 250.

Der Prioritätenmanager 250 wählt dann aus dem gewünschten Soll-Einspritzverlauf die zulässige Anzahl Z der Teileinspritzungen aus. Diese Anzahl Z entspricht der kleinsten Anzahl, der von den Bilanzen 262 bis 268 vorgegebenen Anzahlen.

Bei einer bevorzugten Ausführungsform sind den verschiedenen Teileinspritzungen unterschiedliche Prioritäten zugeordnet. Die Haupteinspritzung besitzt dabei die höchste Priorität und die Nacheinspritzung besitzt in der Regel die niedrigste Priorität.

Bei einer besonders vorteilhaften Ausführungsform können die Prioritäten abhängig vom Betriebszustand vorgeben werden. So kann beispielsweise vorgesehen sein, das die Priorität der Nacheinspritzung vom Zustand des Abgasnachbehandlungssystem abhängt.

Vorzugsweise ist vorgesehen, dass der Prioritätenmanager 250 so viele Teileinspritzungen mit der niedrigsten Priorität ausblendet, bis die maximal mögliche Anzahl Z erreicht ist. Dies bedeutet beispielsweise, wenn die Einspritzverlaufsanforderung 230 vier Teileinspritzungen anfordert und die Minimalauswahl 240 lediglich 2 Teileinspritzungen zuläßt, so blendet der Prioritätenmanager 250 zwei Teileinspritzungen aus. Dabei werden die Teileinspritzungen mit der niedrigsten Priorität ausgeblendet.

Bei der Ansteuerung eines Piezoaktors fließt beim Laden Ladung in die Piezokeramik und beim Entladen zurück in den Bufferkondensator. Dabei geht Energie verloren, die vom DC/DC-Wandler nachgeladen wird. Dieses Nachladen kann nicht beliebig schnell erfolgen. Um ein sicheres Öffnen und/oder Schließen des Aktors gewährleisten zu können, ist eine Mindestspannung erforderlich.

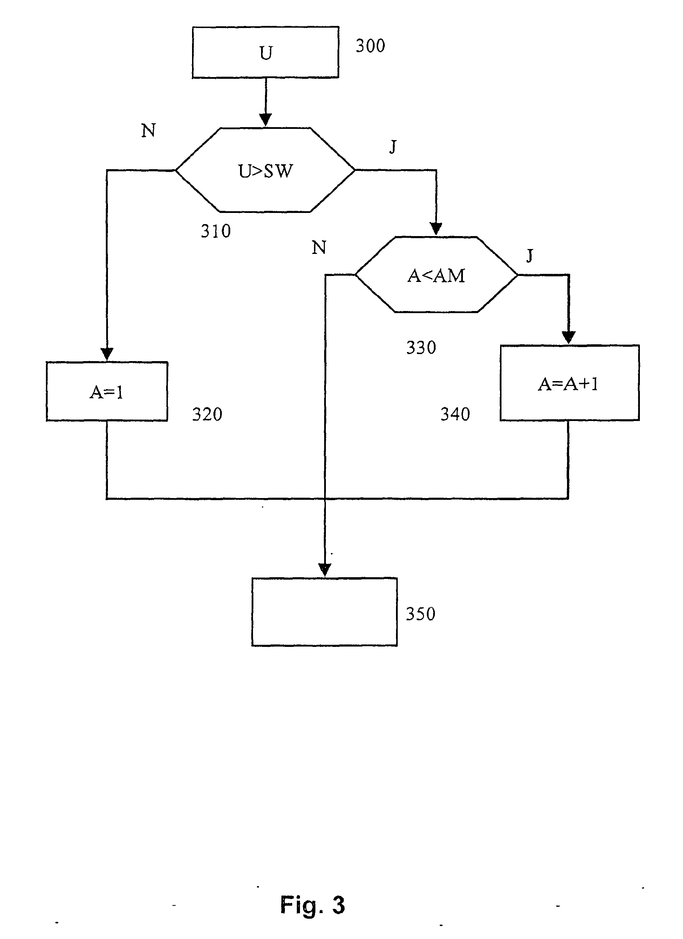

Eine besonders vorteilhafte Ausgestaltung der Ladungsbilanz 262 ist in Figur 3 als Ablaufdiagramm dargestellt. Vor jedem Zumesszyklus wird geprüft, ob die im Bufferkondensator gespeicherte Ladungsmenge für die maximal geforderte Anzahl von Teileinspritzungen ausreicht. Reicht die vorhandene Energie nicht aus, so wird sichergestellt, das mindestens die Teileinspritzungen mit der höchsten Priorität ausgeführt werden. Dies sind im Normalfall die Haupteinspritzung

In einem ersten Schritt 300 wird die Spannung U am Bufferkondensator erfaßt. Im Schritt 310 wird diese mit einem Schwellenwert SW verglichen. Ist die Spannung U kleiner als der Schwellenwert SW, so wird in Schritt 320 die Anzahl Z der möglichen Teileinspritzungen auf 1 gesetzt. Dadurch wird erreicht, dass mindestens die Teileinspritzung mit der höchsten Priorität, dies ist üblicherweise die Haupteinspritzung, durchgeführt werden kann. Der Schwellenwert SW ist derart gewählt, dass sie mindestens für eine Ansteuerung ausreicht.

Ist die Spannung größer als der Schwellenwert SW, so wird in Schritt 330 überprüft, ob die Anzahl Z kleiner als ein Maximalwert ZM ist. Dieser Maximalwert ZM entspricht der Höchstzahl der möglichen Teileinspritzungen. Ist dies der Fall, so wird die Anzahl Z in Schritt 340 um 1 erhöht.

Erkennt die Abfrage 330, das die Anzahl Z dem Maximalwert entspricht oder im Anschluss an die Schritte 320 und 340 wird die Anzahl Z der Minimalwertauswahl 240 übergeben.

Dies bedeutet wenn erkannt wird, dass die Spannung U kleiner als ein Schwellenwert SW ist, so wird die Anzahl der Teileinspritzungen sofort auf 1 begrenzt. Wird anschließend erkannt, dass die Spannung U größer als der Schwellenwert SW ist, so wird bei jedem Einspritzzyklus die Anzahl Z der möglichen Teileinspritzungen erhöht, bis die Höchstzahl ZM wieder erreicht ist.

Der Vorteil der sofortigen Begrenzung auf eine Teileinspritzung hat den Vorteil, die Zahl der Teileinspritzungen von einem sicheren Zustand der möglichen Anzahl angenähert wird. Würde die Anzahl langsam dekrementiert, würde sich ein unsicherer Zustand ergeben, da nicht sichergestellt ist, ob die Energie für die um eins dekrementierte Anzahl von Teileinspritzungen ausreicht.

## Patentansprüche

1. Verfahren zur Steuerung einer Brennkraftmaschine, wobei ein Einspritzvorgang in wenigstens zwei Teileinspritzungen aufgeteilt ist, dass ausgehend von wenigstens einer Steuerung ein Einspritzverlauf vorgebbar ist, wobei der Einspritzverlauf durch die Abfolge der Teileinspritzungen definiert ist, wobei überprüft wird, ob wenigstens eine Ladungsbilanz und/oder eine Mengenbilanz erfüllt ist, wobei die Ladungsbilanz und/oder die Mengenbilanz jeweils eine höchst zulässige Anzahl von Teileinspritzungen vorgibt, dass den Teileinspritzungen abhängig vom Betriebszustand unterschiedliche Prioritäten zugeordnet sind und dass die Teileinspritzungen abhängig von ihrer Priorität unterbunden werden, bis die höchst zulässige Anzahl von Teileinspritzungen erreicht ist.

2. Verfahren nach Anspruch 1, **dadurch gekennzeichnet, dass** das die Teileinspritzungen abhängig von der Ansteuerspannung und/oder von wenigstens einer Größe, von der die Ansteuerspannung abhängt, vorgebbar sind.

3. Verfahren nach Anspruch 2, **dadurch gekennzeichnet, dass** die Anzahl der möglichen Teileinspritzungen auf eins gesetzt wird, wenn eine die Ladung eines Speicherelements charakterisierende Größe, kleiner als ein Schwellenwert ist.

4. Vorrichtung zur Ausführung des Verfahrens nach einem der Ansprüche 1 bis 4.

## Claims

1. Method for controlling an internal combustion engine, with an injection process being split into at least two partial injections, **characterized in that** an injection profile can be predefined on the basis of at least one controller, with the injection profile being defined by the sequence of partial injections, with it being checked as to whether at least one charge balance and/or one quantity balance has been satisfied, with the charge balance and/or the quantity balance in each case predefining a maximum permissible number of partial injections, **in that** the partial injections are assigned different priorities as a function of the operating state, and **in that** the partial injections are suppressed as a function of their priority until the maximum permissible number of partial injections has been reached.

2. Method according to Claim 1, **characterized in that** the partial injections can be predefined as a function of the activation voltage and/or of at least one variable on which the activation voltage is dependent.

3. Method according to Claim 2, **characterized in that** the number of possible partial injections is set to one if a variable which characterizes the charge of a storage element is smaller than a threshold value.

4. Device for carrying out the method according to one of Claims 1 to 4.

## Revendications

1. Procédé de commande à combustion interne, selon lequel une opération d'injection est divisée en au moins deux injections partielles,
**caractérisé en ce que**
partant d'au moins une commande, on prédéfinit une évolution d'injection,
l'évolution d'injection étant définie par la succession des injections partielles,
on vérifie si au moins un bilan de charge et/ ou un bilan de quantité est rempli,
le bilan de charge et/ ou le bilan de quantité, prédéfinis sont chaque fois le nombre maximum autorisé d'injections partielles,
les injections partielles sont associées à des priorités différentes selon l'état de fonctionnement et
les injections partielles sont neutralisées en fonction de leur priorité jusqu'à ce que soit atteint le nombre maximum autorisé d'injections partielles.

2. Procédé selon la revendication 1,
**caractérisé en ce que**
les injections partielles sont prédéfinies selon la tension de commande et/ ou d'au moins une grandeur dépendant de la tension de commande.

3. Procédé selon la revendication 2,
**caractérisé en ce que**
le nombre d'injections partielles possible est fixé à l'unité si une grandeur caractérisant la charge d'un élément de mémoire est inférieure à un seuil.

4. Dispositif pour la mise en oeuvre du procédé selon l'une des revendications 1 à 3.
